# EUROPÄISCHE PATENTSCHRIFT

(11) **EP 2 864 118 B1**
(45) Veröffentlichungstag und Bekanntmachung des Hinweises auf die Patenterteilung: **30.05.2018**
(21) Anmeldenummer: 13730483.8
(22) Anmeldetag: 12.06.2013
(51) Int. Cl.: B32B 17/10, G06K 19/077, H01Q 1/22, B60J 1/02

(54) **VERBUNDSCHEIBE FÜR EINEN KRAFTWAGEN UND KRAFTWAGEN MIT EINER SOLCHEN VERBUNDSCHEIBE**
SAFETY GLAZING FOR A VEHICLE AND VEHICLE EQUIPPED WITH SUCH A GLAZING
VITRAGE FEUILLETÉ POUR UN VÉHICULE ET VÉHICULE ÉQUIPÉ D'UN TEL VITRAGE

(30) Priorität: 23.06.2012 DE 102012012566
(43) Veröffentlichungstag der Anmeldung: 29.04.2015
(73) Patentinhaber: Audi AG, 85045 Ingolstadt (DE)
(72) Erfinder: GANSEN, Tobias, 85111 Pietenfeld (DE); NEUDECKER, Marcus, 80634 München (DE); PFALLER, Daniel, 85139 Wettstetten (DE)
(74) Vertreter: Schuster, Simon
(86) Internationale Anmeldenummer: PCT/EP2013/001725
(87) Internationale Veröffentlichungsnummer: WO 2013/189577

(56) Entgegenhaltungen:
- EP-A1- 1 698 454
- US-A1- 2002 094 407
- US-A1- 2006 010 795
- US-B1- 6 275 157

## Beschreibung

Die Erfindung betrifft eine Verbundscheibe für einen Kraftwagen der im Oberbegriff des Patentanspruchs 1 angegebenen Art. Des Weiteren betrifft die Erfindung einen Kraftwagen mit einer solchen Verbundscheibe.

Die EP 175 901 A2 zeigt eine solche Verbundscheibe für einen Kraftwagen, mit einer ersten Scheibe und einer zweiten Scheibe, welche mittels einer Folie miteinander verklebt sind. Ein Transponder ist dabei an der Innenseite der Verbundscheibe angeordnet.

Des Weiteren zeigt die US 2008 00 681 80 A1 eine Windschutzscheibe, innerhalb welcher ein Schlitz ausgebildet ist, in welchem ein RFID-Transponder angeordnet ist.
Die US 2002/094407 A1 zeigt eine Verbundscheibe, welche zwei Glasscheiben aufweist. Ein polymerer Träger ist mit einer Aufdampfschicht versehen und zwischen jeweiligen Klebeschichten eingebettet, mittels welchen die beiden Glasscheiben miteinander verbunden sind.
Die US 6 275 157 B1 zeigt einen RFID-Transponder, der zwischen zwei Glasscheiben einer Windschutzscheibe oder innerhalb einer einzigen Glasscheibe einer Windschutzscheibe angeordnet ist.
Die DE 100 19 782 A1 zeigt eine Windschutzscheibe für einen Kraftwagen, an deren Innenseite ein Sensor, beispielsweise ein Licht- oder Regensensor, in der mittleren oberen Partie der Windschutzscheibe angebracht ist. Der Sensor ist dabei hinter der Windschutzscheibe angeordnet und beispielsweise hinter einer Befestigungseinrichtung für den Innenspiegel platziert. Dabei ist eine partielle Beschichtung der Windschutzscheibe in dem Bereich vorgenommen, wo eine lichtempfindliche Sensorfläche direkt hinter der Windschutzscheibe liegend angeordnet ist.

Schließlich zeigt die US 63 66220 B1 ebenfalls eine Windschutzscheibe für einen Kraftwagen, an deren Innenseite ein RFID-Transponder angebracht ist.

Je nach Ausführungsform bzw. Materialzusammensetzung der Folie, mittels welcher die erste und zweite Scheibe der Verbundscheibe miteinander verklebt sind, kann es zu einer Hemmung bzw. Störung von Funkwellen kommen, welche von einem an der Verbundscheibe angebrachten Transponder gesendet bzw. empfangen werden.

Es ist daher die Aufgabe der vorliegenden Erfindung, eine Verbundscheibe für einen Kraftwagen und einen Kraftwagen mit einer solchen Verbundscheibe bereitzustellen, mittels welchen eine verbesserte Datenübertragung eines an der Verbundscheibe angebrachten Transponders ermöglicht wird.

Diese Aufgabe wird durch eine Verbundscheibe mit den Merkmalen des Patentanspruchs 1 und durch einen Kraftwagen mit den Merkmalen des Patentanspruchs 8 gelöst. Vorteilhafte Ausgestaltungen mit zweckmäßigen und nicht-trivialen Weiterbildungen der Erfindung sind in den abhängigen Ansprüchen angegeben.

Eine erfindungsgemäße Verbundscheibe für einen Kraftwagen, insbesondere Frontscheibe, umfasst eine erste Scheibe und eine zweite Scheibe, welche mittels einer Folie miteinander verklebt sind, wobei sich die erfindungsgemäße Verbundscheibe dadurch auszeichnet, dass auf die Folie eine Infrarot-Strahlen reflektierende Schicht mit wenigstens einer Aussparung aufgebracht ist, innerhalb welcher ein Transponder zwischen den beiden Scheiben angeordnet ist. Dadurch wird sichergestellt, dass der in der Aussparung vorgesehene Transponder ungestört Daten senden und empfangen kann, da aufgrund der Aussparung keine störenden Einflusse durch die Folie auf den Transponder ausgeübt werden. Des Weiteren ist der Transponder durch seine Anordnung zwischen den beiden Scheiben besonders gut geschützt und kann beispielsweise vor unbeabsichtigten Beschädigungen oder einem Diebstahl bewahrt werden.

Gemäß einer vorteilhaften Ausgestaltung der Erfindung ist es vorgesehen, dass der Transponder ein RFID-Transponder ist. Vorzugsweise ist der Transponder dabei dazu ausgelegt, bei einer Frequenz von 868 MHz Daten zu senden und zu empfangen. Mit anderen Worten handelt es sich bei dem Transponder um einen Ultra-Hochfrequenztransponder. Im Gegensatz zu Nieder- oder Hochfrequenztranspondern weist ein solcher Ultra-Hochfrequenztransponder eine wesentlich höhere Reichweite auf. Bei Niederfrequenztranspondern beträgt die typische Reichweite nur einige Millimeter bis einen Meter, wobei bei Hochfrequenztranspondern die typische Reichweite bis zu 3 m beträgt. Bei einem Ultra-Hochfrequenztransponder hingegen werden typische Reichweiten von bis zu 9 m erzielt. Des Weiteren weist ein Ultra-Hochfrequenztransponder eine wesentlich schnellere Lesegeschwindigkeit als Niederfrequenz- oder Hochfrequenztransponder auf.

Bei einer weiteren vorteilhaften Ausführungsform der Erfindung ist die Infrarot-Strahlen reflektierende Schicht auf die Folie aufgedampft. Dadurch kann die Infrarot-Strahlen reflektierende Schicht besonders kostengünstig bei einer hohen Qualität auf die Folie aufgebracht werden.

Gemäß einer weiteren vorteilhaften Ausführungsform ist es vorgesehen, dass die Infrarot-Strahlen reflektierende Schicht eine Metalloxidschicht ist, wobei die Infrarot-Strahlen reflektierende Schicht vorzugsweise eine Silberoxidschicht ist. Dadurch wird eine besonders gute Reflexion von UV-Strahlen sichergestellt, sodass ein Fahrzeuginnenraum vor einer übermäßigen Aufheizung durch Sonneneinstrahlung bewahrt werden kann.

In einer weiteren Ausgestaltung der Erfindung ist es vorgesehen, dass die Scheiben aus Glas ausgebildet sind.

Ein erfindungsgemäßer Kraftwagen umfasst eine erfindungsgemäße Verbundscheibe oder vorteilhafte Ausführungsformen der Verbundscheibe.

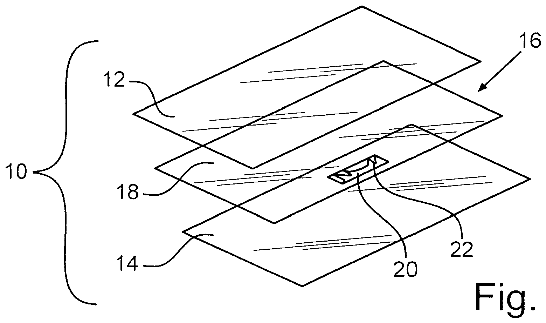

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine Verbundscheibe für einen Kraftwagen in einer teiltransparenten Explosionsdarstellung.

Eine Verbundscheibe 10 für einen Kraftwagen umfasst eine erste Scheibe 12 und eine zweite Scheibe 14, welche mittels einer Folie 16 miteinander verklebt sind. Im vorliegenden Fall handelt es sich bei der Verbundscheibe 10 um eine Frontscheibe für einen Kraftwagen, wobei die Verbundscheibe 10 auch für weitere andere Scheiben eines Kraftwagens einsetzbar ist. Die Scheiben 12, 14 sind dabei aus Glas ausgebildet.

Auf die Folie 16 ist eine Infrarot-Strahlen reflektierende Schicht 18 aufgetragen. Die Infrarot-Strahlen reflektierende Schicht 18 ist dabei auf die Folie 16 aufgedampft, wobei es sich bei der Infrarot-Strahlen reflektierenden Schicht im vorliegenden Fall um eine Silberoxidschicht handelt. Es kann sich dabei aber genauso gut um eine andere Metalloxidschicht handeln. Durch die Infrarot-Strahlen reflektierende Schicht 18 wird eine zu starke Aufheizung eines Fahrzeuginnenraums verhindert, da ein entsprechender Anteil der auf die Verbundscheibe 10 auftreffenden Infrarot-Strahlen bei einer Sonneneinstrahlung reflektiert werden.

Innerhalb der Infrarot-Strahlen reflektierenden Schicht 18 ist eine Aussparung 20 vorgesehen, innerhalb welcher ein Transponder 22 zwischen den beiden Scheiben 12, 14 angeordnet ist. Alternativ kann der Transponder 22 auch an einer fahrzeuginnenseitig zugewandten, hier nicht näher bezeichneten Seite der Verbundscheibe 10 im Bereich der Aussparung 20 angeordnet sein. Bei dem Transponder 22 handelt es sich vorliegend um einen RFID-Transponder, welcher dazu ausgelegt ist, bei einer Frequenz von 868 MHz Daten zu senden und zu empfangen. Mit anderen Worten handelt es sich bei dem Transponder 22 um einen Ultra-Hochfrequenztransponder. Diese Sende-Frequenz von 868 MHz ist dabei bei einem Einsatz innerhalb der EU vorgesehen. Der Transponder 22 kann auch einen anderen Arbeitsfrequenzbereich aufweisen, beispielsweise falls ein Einsatz in den USA vorgesehen sein sollte, beträgt der Sende- und Empfangsfrequenzbereich 915 MHz.

Bei Nicht-Vorhandensein der Aussparung 20 würde die Infrarot-Strahlen reflektierende Schicht 18 das Senden und Empfangen von Funksignalen bzw.

Daten des Transponders 22 erheblich beeinträchtigen. Dadurch, dass der Transponder 22 allerdings innerhalb der Aussparung 20 vorgesehen ist, wird auf einfache Weise sichergestellt, dass der Transponder 22 mit einem oder weiteren hier nicht dargestellten Lesegeräten kommunizieren kann. Somit wird sichergestellt, dass sobald der Transponder 22 bzw. die Verbundscheibe 10 in die Nähe eines entsprechenden Lesegeräts geraten, der Transponder 22 von einem Feld des Lesegerätes aktiviert wird. Anschließend sendet der Transponder 22 entsprechend zu übertragende Daten an das Lesegerät, welches diese dann auswerten kann. Beispielsweise kann der Transponder 22 dazu genutzt werden, in einem System zum bargeldlosen Bezahlen, beispielsweise an Tankstellen oder dergleichen, eingesetzt zu werden.

## Patentansprüche

1. Verbundscheibe (10) für einen Kraftwagen, insbesondere Frontscheibe, mit einer ersten Scheibe (12) und einer zweiten Scheibe (14), welche mittels einer Folie (16) miteinander verklebt sind,
**dadurch gekennzeichnet, dass**
auf die Folie (16) eine Infrarot-Strahlen reflektierende Schicht (18) mit wenigstens einer Aussparung (20) aufgebracht ist, innerhalb welcher ein Transponder (22) zwischen den beiden Scheiben (12, 14) angeordnet ist.

2. Verbundscheibe (10) nach Anspruch 1,
**dadurch gekennzeichnet, dass**
der Transponder (22) ein RFID-Transponder ist.

3. Verbundscheibe (10) nach Anspruch 1 oder 2,
**dadurch gekennzeichnet, dass**
der Transponder (22) dazu ausgelegt ist, bei einer Frequenz von 868 MHz Daten zu senden und zu empfangen.

4. Verbundscheibe (10) nach einem der vorhergehenden Ansprüche,
**dadurch gekennzeichnet, dass**
die Infrarot-Strahlen reflektierende Schicht (18) auf die Folie (16) aufgedampft ist.

5. Verbundscheibe (10) nach einem der vorhergehenden Ansprüche,
**dadurch gekennzeichnet, dass**
die Infrarot-Strahlen reflektierende Schicht (18) eine Metalloxidschicht ist.

6. Verbundscheibe (10) nach einem der vorhergehenden Ansprüche,
**dadurch gekennzeichnet, dass**
die Infrarot-Strahlen reflektierende Schicht (18) eine Silberoxidschicht ist.

7. Verbundscheibe (10) nach einem der vorhergehenden Ansprüche,
**dadurch gekennzeichnet, dass**
die Scheiben (12, 14) aus Glas ausgebildet sind.

8. Kraftwagen mit einer Verbundscheibe (10) nach einer der vorhergehenden Ansprüche.

## Claims

1. Composite pane (10) for a motor vehicle, in particular a front windscreen, comprising a first pane (12) and a second pane (14) which are adhered to one another by means of a film (16), **characterised in that** a layer (18) that reflects infrared beams comprising at least one cut-out (20) is applied onto the film (16), a transponder (22) being arranged in the cut-out between the two panes (12, 14).

2. Composite pane (10) according to claim 1, **characterised in that** the transponder (22) is an RFID transponder.

3. Composite pane (10) according to claim 1 or 2, **characterised in that** the transponder (22) is configured to send and receive data at a frequency of 868 MHz.

4. Composite pane (10) according to any of the preceding claims, **characterised in that** the layer (18) that reflects infrared beams is vapour-deposited onto the film (16).

5. Composite pane (10) according to any of the preceding claims, **characterised in that** the layer (18) that reflects infrared beams is a metal oxide layer.

6. Composite pane (10) according to any of the preceding claims, **characterised in that** the layer (18) that reflects infrared beams is a silver oxide layer.

7. Composite pane (10) according to any of the preceding claims, **characterised in that** the panes (12, 14) are made of glass.

8. Motor vehicle comprising a composite pane (10) according to any of the preceding claims.

## Revendications

1. Vitrage feuilleté (10) pour un véhicule automobile, en particulier pare-brise, avec une première vitre (12) et avec une deuxième vitre (14), qui sont collées l'une à l'autre au moyen d'un film (16),
**caractérisé en ce qu'**une couche (18) réfléchissant les rayons infrarouges est appliquée sur le film (16) avec au moins un évidement (20) à l'intérieur duquel est agencé un transpondeur (22) entre les deux vitres (12, 14).

2. Vitrage feuilleté (10) selon la revendication 1, **caractérisé en ce que** le transpondeur (22) est une étiquette RFID.

3. Vitrage feuilleté (10) selon la revendication 1 ou 2, **caractérisé en ce que** le transpondeur (22) est conçu pour émettre et recevoir des données à une fréquence de 868 MHz.

4. Vitrage feuilleté (10) selon l'une quelconque des revendications précédentes,
**caractérisé en ce que** la couche (18) réfléchissant les rayons infrarouges est appliquée sur le film (16) par métallisation sous vide.

5. Vitrage feuilleté (10) selon l'une quelconque des revendications précédentes,
**caractérisé en ce que** la couche (18) réfléchissant les rayons infrarouges est une couche d'oxyde métallique.

6. Vitrage feuilleté (10) selon l'une quelconque des revendications précédentes,
**caractérisé en ce que** la couche (18) réfléchissant les rayons infrarouges est une couche d'oxyde d'argent.

7. Vitrage feuilleté (10) selon l'une quelconque des revendications précédentes,
**caractérisé en ce que** les vitres (12, 14) sont en verre.

8. Véhicule automobile avec un vitrage feuilleté (10) selon l'une quelconque des revendications précédentes.
